# EUROPEAN PATENT APPLICATION

(11) **EP 3 760 881 A1**
(43) Date of publication of application: **06.01.2021**
(21) Application number: 19761281.5
(22) Date of filing: 20.02.2019
(51) Int. Cl.: F15B 15/14, F16J 15/18, F16J 15/3232

(54) **SEAL STRUCTURE IN HYDRAULIC CYLINDER, AND SAID HYDRAULIC CYLINDER**

(30) Priority: 28.02.2018 JP 2018035914
(71) Applicant: SMC Corporation, Tokyo 101-0021 (JP)
(72) Inventor: KUDO Masayuki, Tsukubamirai-shi, Ibaraki 300-2493 (JP); TAKEDA Kenichi, Tsukubamirai-shi, Ibaraki 300-2493 (JP); KAWAKAMI Masahiko, Tsukubamirai-shi, Ibaraki 300-2493 (JP); TAMURA Ken, Tsukubamirai-shi, Ibaraki 300-2493 (JP); ODAKA Tsukasa, Tsukubamirai-shi, Ibaraki 300-2493 (JP)
(74) Representative: Keil & Schaafhausen Patentanwälte PartGmbB
(86) International application number: PCT/JP2019/006246
(87) International publication number: WO 2019/167738

(57) **Abstract**

[Object] To provide a seal structure that is between a piston and a cylinder hole in a hydraulic cylinder and that achieves smoother operation of the piston and allows longer service life of a packing, and provide the hydraulic cylinder.

[Solution] A packing 20 has an outer circumferential surface and includes a pair of sealing parts 23 (23a) and 24 (24a) located at opposite ends of the packing in a direction along an axis L. A piston 4 has a sliding face 4c having a first recess groove 12. When fitted in the first recess groove 12, the packing 20 has an outside diameter smaller than the diameter of a slide-receiving face 3c of a cylinder hole 3. The piston divides the cylinder hole into a pair of chambers 3a and 3b. While a compressed fluid is supplied to either one of the chambers 3a and 3b, a side edge of the packing adjacent to the chamber at a high pressure is stretched in a radial direction Y by elastic deformation due to the pressure of the compressed fluid, thus causing a sealing part adjacent to the chamber at the high pressure to reduce a gap δ formed with the slide-receiving face of the cylinder hole or come into contact with the slide-receiving face.

## Description

### Technical Field

The present invention relates to a seal structure in a hydraulic cylinder having a cylinder hole in which a piston is slidably disposed such that the seal structure is between a sliding face defined by an outer circumferential surface of the piston and a slide-receiving face defined by an inner circumferential surface of the cylinder hole, and relates to the hydraulic cylinder.

### Background Art

Hydraulic cylinders each having a cylinder hole in which a piston is slid by using the pressure of a compressed fluid, such as compressed air, have been widely known as disclosed in, for example, PTL 1. In such a hydraulic cylinder, the piston divides the cylinder hole into a pair of chambers. The piston has an outer circumferential surface, serving as a sliding face, around the axis thereof. The sliding face has thereon a sealing member made of a rubber elastic material, namely, an annular packing. Such arrangement prevents the compressed fluid from leaking from the pair of chambers through a gap formed between the sliding face and a slide-receiving face defined by an inner circumferential surface of the cylinder hole around the axis thereof.

In such a typical hydraulic cylinder disclosed in, for example, PTL 1, the outside diameter of the packing fitted on the sliding face of the piston is larger than the inside diameter of the slide-receiving face of the cylinder hole to ensure that the gap between the sliding face of the piston and the slide-receiving face of the cylinder hole is sealed. In other words, the packing is kept in pressure contact with the slide-receiving face while being elastically deformed, regardless of whether the piston is operated.

However, if the packing kept in pressure contact with the slide-receiving face of the cylinder hole is left for a long time without being moved, the packing may be permanently deformed or adhere to the slide-receiving face. Furthermore, while the piston is being operated, the packing is directly affected by conditions of the slide-receiving face (e.g., the roughness of the slide-receiving face and the state of a lubricating film). For example, sliding friction with the slide-receiving face or unevenness of the lubricating film may cause sliding friction or torsion of the packing and thus lead to damage to or deterioration of the packing or may cause an adverse effect on an operation of the piston (e.g., a reduction in operating efficiency or cogging).

### Citation List

### Patent Literature

PTL 1: Japanese Unexamined Patent Application Publication No. 2011-027127

### Summary of Invention

### Technical Problem

A technical problem of the present invention is to provide a seal structure that is between a piston and a cylinder hole in a hydraulic cylinder, that achieves smoother operation of the piston, and that allows longer service life of a packing, and to provide a hydraulic cylinder including the seal structure. Solution to Problem

To solve the above-described problem, the present invention provides a seal structure between a piston and a cylinder hole, in which the piston is slidable axially, in a hydraulic cylinder, the cylinder hole having a first chamber and a second chamber located on opposite sides of the piston in an axial direction, the piston having an outer circumferential surface around the axis thereof to define a sliding face, the cylinder hole having an inner circumferential surface around the axis thereof to define a slide-receiving face to which the sliding face of the piston faces and over which the piston slides, the sliding face of the piston having a recess groove that extends around the axis of the piston and opens in a radial direction of the piston, the recess groove holding a proximal part, serving as an inner circumferential part, of a packing made of a rubber elastic material, the packing including a distal part, serving as an outer circumferential part, protruding from the sliding face, the distal part of the packing including a first sealing part at a side edge of the packing that is adjacent to the first chamber in the axial direction and a second sealing part at a side edge of the packing that is adjacent to the second chamber in the axial direction, the first sealing part and the second sealing part extending around the axis of the packing, the first sealing part and the second sealing part of the packing held in the recess groove each having an outside diameter smaller than the diameter of the slide-receiving face of the cylinder hole, wherein while a compressed fluid is supplied to either one of the first chamber and the second chamber, the side edge of the packing adjacent to the chamber to which the fluid is supplied is radially stretched by elastic deformation due to the pressure of the fluid, thus causing the sealing part that is one of the first sealing part and the second sealing part and that is adjacent to the chamber, to which the fluid is supplied, to reduce a gap formed with the slide-receiving face of the cylinder hole or come into contact with the slide-receiving face.

In the seal structure, preferably, the packing and the recess groove each have a cross-section along the axis that is symmetric in the radial direction, the recess groove has a depth extending in the radial direction from the sliding face to a bottom surface, with which a proximal end of the packing is in contact, of the recess groove, and the depth is greater than or equal to 1/2 of the height of the packing from the proximal end to a distal end thereof. More preferably, the recess groove has a pair of side surfaces that extend radially from opposite ends of the bottom surface in the axial direction and face each other, and the bottom surface forms an angle of 90 degrees or less with each of the pair of side surfaces. Still more preferably, the proximal part of the packing held in the recess groove has a maximum width in the axial direction that is smaller than a minimum width of the recess groove between the pair of side surfaces. The proximal end of the packing may be fixed to the bottom surface of the recess groove with adhesive.

In the seal structure, preferably, the packing has a pair of side faces located at opposite ends thereof in the axial direction, the pair of side faces are parallel to and opposite each other, the packing has a cross-section along the axis that is symmetric in the axial direction, the distal part of the packing has a distal face that faces the slide-receiving face, the first sealing part is located at the side edge of the distal face adjacent to the first chamber in the axial direction, and the second sealing part is located at the side edge of the distal face adjacent to the second chamber in the axial direction. More preferably, the first sealing part is formed by a first projection projecting from the distal face toward the slide-receiving face, and the second sealing part is formed by a second projection projecting from the distal face toward the slide-receiving face. Still more preferably, the first projection and the second projection each have a tip formed by an angular portion that forms an acute angle with the corresponding one of the pair of side faces of the packing. Even more preferably, the distance from the slide-receiving face to the tip of the first projection is equal to the distance from the slide-receiving face to the tip of the second projection, the distal face of the packing is parallel to the slide-receiving face, each of the first projection and the second projection has a height from the distal face to the tip, the height of the first projection is equal to that of the second projection, and the first projection and the second projection are spaced apart from each other in the axial direction.

Each of the first projection and the second projection may be wedge-shaped such that the width of the projection in the axial direction gradually decreases in a direction from the distal face to the tip. The distal face of the packing may have a labyrinth projection, serving as a labyrinth seal, located between the first projection and the second projection.

Each of the pair of side faces of the packing may have a circular constriction groove in communication with an opening of the recess groove. More preferably, the constriction groove has a curved surface.

In the seal structure, preferably, the hydraulic cylinder has a supply port connected to the cylinder hole, let C 1 denote the sonic conductance of the supply port, let C2 denote the sonic conductance of a leakage passage formed between the sliding face and the slide-receiving face by the gap between the packing and the slide-receiving face, and the ratio of the sonic conductance C1 to the sonic conductance C2 is 2.0 or more at all times.

Preferably, the piston has a wear ring extending circumferentially on the sliding face such that the wear ring is located next to the packing in the axial direction, and the wear ring has an outside diameter larger than that of the packing while the compressed fluid is supplied to neither the first chamber nor the second chamber.

The present invention further provides a hydraulic cylinder including the above-described seal structure.

### Advantageous Effects of Invention

As described above, according to the present invention, the packing, which includes the first sealing part and the second sealing part, held in the recess groove has an outside diameter smaller than the inside diameter of the cylinder hole. However, while the compressed fluid is supplied to either one of the first chamber and the second chamber, the side edge of the packing that is adjacent to the chamber to which the compressed fluid is supplied, or a highpressure chamber, is radially stretched by elastic deformation due to the pressure of the compressed fluid, thus causing the sealing part that is one of the first sealing part and the second sealing part and that is adjacent to the highpressure chamber to reduce the gap formed with the slide-receiving face of the cylinder hole or come into contact with the slide-receiving face.

Therefore, even while the piston is maintained in a stopped state in the cylinder hole for a long time, for example, while the compressed fluid is supplied to neither the first chamber nor the second chamber, the sealing parts of the packing are not in contact with the slide-receiving face of the cylinder hole. Thus, the packing made of the rubber elastic material can be prevented from deteriorating, such as permanently deforming or adhering to the slide-receiving face of the cylinder hole. Furthermore, while the compressed fluid is supplied to either one of the first chamber and the second chamber, sliding friction between the packing and the slide-receiving face can be reduced as much as possible. This can reduce as much as possible the likelihood that conditions of the slide-receiving face (e.g., the roughness of the slide-receiving face and the state of a lubricating film) may cause an adverse effect on an operation of the piston (e.g., a reduction in operating efficiency or cogging) and cause an adverse effect on the packing (e.g., damage to or deterioration of the packing resulting from sliding friction or torsion). This achieves smoother operation of the piston and allows longer service life of the packing.

### Brief Description of Drawings

[Fig. 1] Fig. 1 is a schematic sectional view of an embodiment of a hydraulic cylinder according to the present invention taken along the axis of the hydraulic cylinder.
[Fig. 2] Fig. 2 includes schematic enlarged sectional views of part A in Fig. 1 to illustrate a first embodiment of a seal structure according to the present invention, (a) illustrating an inoperative state of a piston free from the pressure of a compressed fluid, (b) illustrating an operative state of the piston subjected to the pressure of the compressed fluid.
[Fig. 3] Fig. 3 includes similar schematic sectional views illustrating a second embodiment of the seal structure according to the present invention, (a) illustrating the inoperative state of the piston free from the pressure of the compressed fluid, (b) illustrating the operative state of the piston subjected to the pressure of the compressed fluid.
[Fig. 4] Fig. 4 includes similar schematic sectional views illustrating a third embodiment of the seal structure according to the present invention, (a) illustrating the inoperative state of the piston free from the pressure of the compressed fluid, (b) illustrating the operative state of the piston subjected to the pressure of the compressed fluid.
[Fig. 5] Fig. 5 is a schematic sectional view illustrating a modification of the seal structure according to the second embodiment of Fig. 3
[Fig. 6] Fig. 6 is a diagram illustrating a model of a hydraulic cylinder used for analysis in Fig. 7.
[Fig. 7] Fig. 7 is a graph showing the relationships between a supply pressure Ps of the compressed fluid, pressure drops ΔP2, and the ratio of a conductance C1 to a conductance C2.

### Description of Embodiments

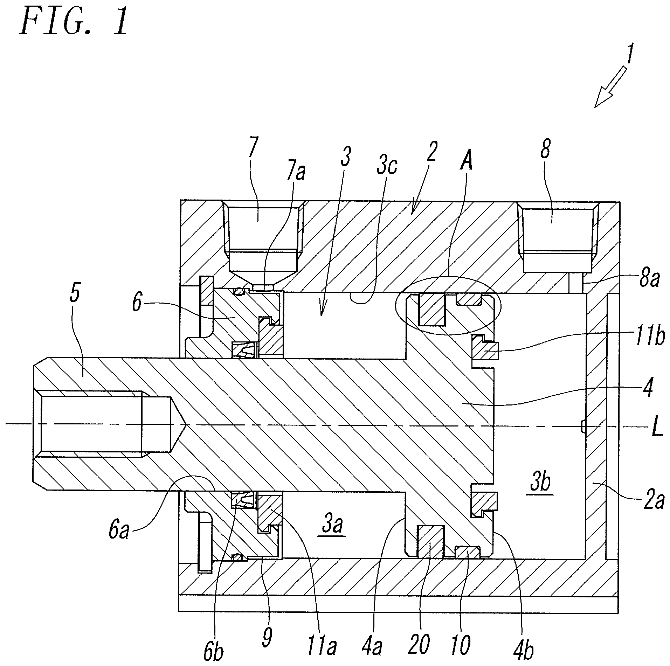

As illustrated in Fig. 1, a hydraulic cylinder 1 including a seal structure according to the present invention includes a body 2 having therein a cylinder hole 3 extending in a direction along an axis L and a piston 4 disposed in the cylinder hole 3 such that the piston 4 is slidable in the direction along the axis L. The cylinder hole 3 is defined by an inner circumferential surface 3c, and is divided into a first chamber 3a adjacent to a rod and a second chamber 3b adjacent to a head by the piston 4.

The rod, 5, extending through the first chamber 3a along the axis L is secured to the piston 4. The cylinder hole 3 has an opening located at an end adjacent to the first chamber 3a. A rod cover 6 is hermetically fitted in and fixed to the opening. The rod cover 6 has a bearing hole 6a extending therethrough along the axis L such that the rod 5 extends through and is supported by the bearing hole 6a. The rod 5 hermetically extends through the bearing hole 6a such that the rod 5 is slidable in the direction along the axis L. The cylinder hole 3 further has an end adjacent to the second chamber 3b. This end is hermetically closed by an end plate 2a, which is molded in one piece with the body 2.

The body 2 has supply and discharge ports, which are selectively connected to an external pressure source or the atmosphere through a switching valve to supply a compressed fluid, such as compressed air, into the cylinder hole 3 or discharge the compressed fluid out of the cylinder hole 3 in order to operate the piston 4. In this embodiment, the supply and discharge ports include a first port 7 and a second port 8. The first port 7 has a first passage 7a having a reduced cross-sectional area, and the first passage 7a is connected to the first chamber 3a. The second port 8 has a second passage 8a having a reduced cross-sectional area, and the second passage 8a is connected to the second chamber 3b.

In such arrangement, an outer circumferential surface of the rod cover 6 and an inner circumferential surface of the cylinder hole 3 defines a gap, which serves as a circular passage 9 on a portion of the rod cover 6 that is located adjacent to the first chamber 3a in the direction along the axis L. The circular passage 9 is in communication with the first chamber 3a. The first passage 7a of the first port 7 is connected to the circular passage 9. Furthermore, the second passage 8a of the second port 8 is connected in proximity to the end plate 2a in the cylinder hole 3.

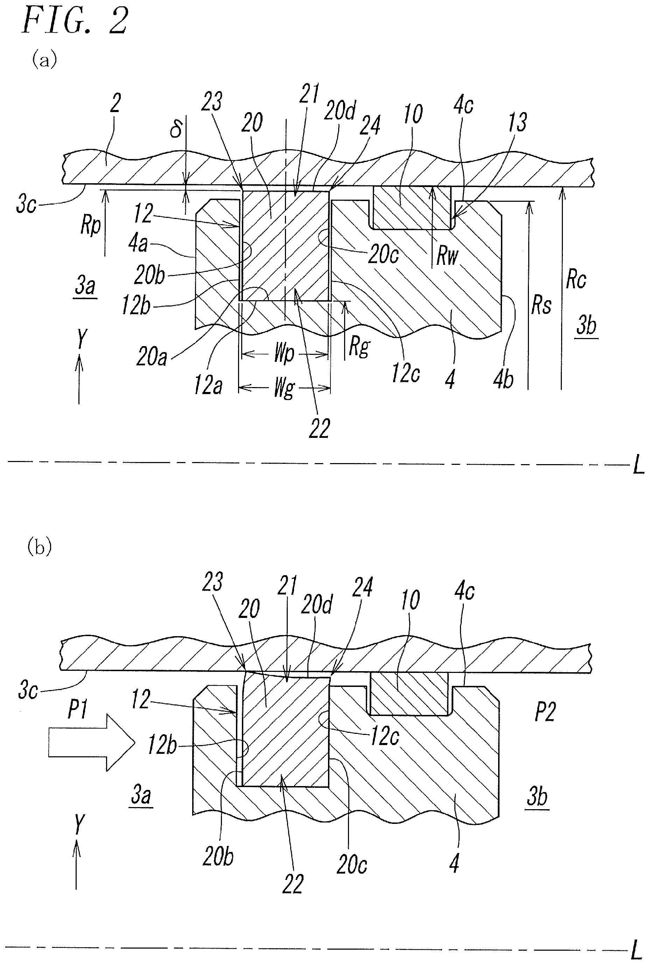

The cylinder hole 3 and the piston 4 have the same cross-sectional shape in a plane perpendicular to the axis L. The cross-sectional shape is a circular, elliptical, or racetrack-like shape. As illustrated in Figs. 2 to 5, the cylinder hole 3 is defined by a slide-receiving face 3c, which is the inner circumferential surface having a radius Rc about the axis L. Furthermore, the piston 4 has a first face 4a that defines the first chamber 3a and on which the rod 5 is located, a second face 4b that defines the second chamber 3b, and a sliding face 4c that serves as an outer circumferential surface having a radius Rs about the axis L. In this arrangement, the radius Rs of the sliding face 4c is slightly smaller than the radius (or an inside radius of the cylinder hole 3) Rc of the slide-receiving face 3c of the cylinder hole 3. Thus, the slide-receiving face 3c and the sliding face 4c face each other with a gap therebetween (for the sake of convenience, as used herein, the term "radius" of a component located circumferentially around the axis L refers to a distance from the axis L).

The sliding face 4c of the piston 4 has thereon a packing 20, which is an annular sealing member to seal the gap between the sliding face 4c and the slide-receiving face 3c of the cylinder hole 3. Additionally, a wear ring 10 to prevent seizing and galling of the piston 4 caused by contact between the sliding face 4c and the slide-receiving face 3c and protect the packing 20 is fitted on the sliding face 4c such that the wear ring 10 is located next to the packing 20 in the direction along the axis L.

For a material for the packing 20, any rubber elastic material that exhibits a sealing function may be used. For example, nitrile rubber or fluororubber can be used. For a material for the wear ring 10, any material that exhibits a bearing function may be used. For example, fluorocarbon resin (PTFE) or cloth-reinforced phenolic resin can be used.

The second face 4b of the piston 4 has a cushioning member 11b, and an inner face of the rod cover 6 that defines the first chamber 3a has a cushioning member 11a. The cushioning members 11a and 11b are intended to reduce the impact of collision of the piston 4 at a terminal position adjacent to the first chamber 3a or at a terminal position adjacent to the second chamber 3b in the direction along the axis L. The bearing hole 6a of the rod cover 6 has an inner circumferential surface having a groove, in which a lip-shaped sealing member 6b is fitted. The lip-shaped sealing member 6b opens into the first chamber 3a, and is in sliding contact with an outer circumferential surface of the rod 5.

The seal structure between the slide-receiving face 3c of the cylinder hole 3 and the sliding face 4c of the piston 4 will now be described more concretely with reference to Figs. 2 to 5.

In the seal structure according to each embodiment of the present invention, the sliding face 4c of the piston 4 has a circular first recess groove 12, which opens in a radial direction Y, extending around the axis L. The packing 20 is fitted in the first recess groove 12. The sliding face 4c further has a circular second recess groove 13, which similarly opens in the radial direction Y, extending around the axis L such that the second recess groove 13 is located closer to the second chamber 3b than the first recess groove 12 in the direction along the axis L. The wear ring 10 is fitted in the second recess groove 13.

The first recess groove 12 is defined by a bottom surface 12a extending circularly around the axis L and also extending flat along the axis L, a first side surface 12b adjacent to the first chamber 3a, and a second side surface 12c adjacent to the second chamber 3b. The first side surface 12b and the second side surface 12c extend perpendicularly, or in the radial direction Y (perpendicular to the axis L), from opposite ends of the bottom surface 12a in the direction along the axis L and face each other. In other words, the sliding face 4c intersects at right angles the two side surfaces 12b and 12c extending in planes parallel to each other, thus forming an opening of the first recess groove 12. The first recess groove 12 is rectangular in cross-section along the axis L, and this shape is symmetric with respect to its center line in the radial direction Y.

In this arrangement, the bottom surface 12a of the first recess groove 12 has a radius Rg about the axis L. Therefore, the distance, Rs - Rg, from the sliding face 4c to the bottom surface 12a corresponds to the depth, Dg, of the first recess groove 12. The depth Dg of the first recess groove 12 is uniform entirely in a circumferential direction of the piston 4. The first recess groove 12 has a width Wg along the axis L. The width Wg is also uniform along the entire depth of the first recess groove 12 from the opening of the groove to the bottom surface 12a. The shape of the first recess groove 12 is not limited to the above-described one. For example, the two side surfaces 12b and 12c may meet at acute angles the bottom surface 12a and the sliding face 4c such that the width Wg gradually decreases in a direction from the bottom surface 12a to the opening.

Furthermore, when not in use, or not fitted in the first recess groove 12, the packing 20 has an inside radius smaller than the radius Rg of the bottom surface 12a of the first recess groove 12. In other words, the circumferential length of the inner circumferential surface (or proximal face), 20a, of the packing 20 is shorter than that of the bottom surface 12a of the first recess groove 12. Therefore, when fitted in the first recess groove 12, as illustrated in Figs. 2 to 5, the packing 20 made of a rubber elastic material is stretched in the circumferential direction and the inner circumferential surface 20a is in elastic pressure contact with the bottom surface 12a. This achieves sealing contact between the inner circumferential surface 20a of the packing 20 and the bottom surface 12a of the first recess groove 12.

The packing 20 fitted in the first recess groove 12 will now be described.

In the seal structure according to the first embodiment illustrated in Fig. 2, the packing 20 is solid and rectangular in cross-section along the axis L, and this rectangular shape is substantially symmetric with respect to the center line in the radial direction Y. Specifically, the outer shape of the packing 20 is defined by four faces, namely, the proximal face 20a that is the inner circumferential surface of the packing 20 and is circular about the axis L and extends flat along the axis L, a distal face 20d that is an outer circumferential surface of the packing 20 and is circular about the axis L and extends flat along the axis L, a first side face 20b that connects first ends of the proximal face 20a and the distal face 20d in the direction along the axis L, faces toward the first chamber 3a, and extends flat in the radial direction Y, and a second side face 20c that connects second ends of the proximal face 20a and the distal face 20d in the direction along the axis L, faces toward the second chamber 3b, and extends flat in the radial direction Y.

As described above, the whole of the proximal face 20a is in pressure contact with the bottom surface 12a and is parallel to the distal face 20d. The two side faces 20b and 20c are parallel to and opposite each other, and form right angles with the proximal face 20a and the distal face 20d. Of these side faces, the first side face 20b faces the first side surface 12b of the first recess groove 12. The second side face 20c faces the second side surface 12c thereof.

Let Rp denote the outside radius of the packing 20 fitted in the first recess groove 12 (or the outside radius of the distal face 20d in the first embodiment). The distance from the proximal face 20a of the packing 20 in pressure contact with the bottom surface 12a to the distal face 20d, or the height, Hp (= Rp - Rg), of the packing 20 in the radial direction Y, is larger than the depth Dg (= Rs - Rg) of the first recess groove 12. The packing 20 includes a distal part 21 including the distal face 20d and having a height Hp-Dg and a proximal part 22 including the proximal face 20a and having a height Dg. The distal part 21 protrudes from the sliding face 4c in the radial direction Y. The proximal part 22 is held in the first recess groove 12. In this arrangement, the depth Dg of the first recess groove 12 is preferably 1/2 or more of the overall height Hp of the packing 20 because the packing 20 can be prevented from moving away from the first recess groove 12.

In the seal structure according to the first embodiment, the packing 20 has a width Wp in the direction along the axis L and the width Wp is uniform in the radial direction Y from the proximal face 20a to the distal face 20d. The width Wp is smaller than the width Wg of the first recess groove 12. In other words, a maximum width Wpmax of the packing 20 in the radial direction Y is smaller than a minimum width Wgmin of the first recess groove 12 in the radial direction Y. Therefore, a fluid pressure in the first chamber 3a and a fluid pressure in the second chamber 3b in the cylinder hole 3 allow the packing 20 to reciprocate in the direction along the axis L between the first side surface 12b and the second side surface 12c of the first recess groove 12.

The radius Rp of the distal face 20d of the packing 20 is slightly smaller than the radius Rc of the slide-receiving face 3c of the cylinder hole 3. The distal face 20d faces the slide-receiving face 3c of the cylinder hole 3 with a circular gap δ (= Rc - Rp) therebetween such that these faces are substantially parallel to each other. In this arrangement, an end of the distal part 21 of the packing 20 that is adjacent to the first side face 20b (or adjacent to the first chamber 3a) serves as a circular first sealing part 23 located around the axis L. Similarly, an end of the distal part 21 that is adjacent to the second side face 20c (or adjacent to the second chamber 3b) serves as a circular second sealing part 24 located around the axis L. The first sealing part 23 includes a right-angled angular portion at which the distal face 20d meets the first side face 20b. The second sealing part 24 includes a right-angled angular portion at which the distal face 20d meets the second side face 20c.

As will be described later, when the compressed fluid is supplied selectively to either one of the chambers 3a and 3b, which are respectively adjacent to the first and second sealing parts 23 and 24, in the cylinder hole 3, a fluid pressure in the chamber causes elastic deformation of the packing 20, thus causing the first sealing part 23 or the second sealing part 24 to reduce the gap δ (= Rc - Rp) formed with the slide-receiving face 3c or come into contact with the slide-receiving face 3c. This ensures that the gap between the slide-receiving face 3c of the cylinder hole 3 and the sliding face 4c of the piston 4 is sealed as necessary.

The circular second recess groove 13 to hold and attach the wear ring 10 to the sliding face 4c is provided in the sliding face 4c of the piston 4 such that the second recess groove 13 is located closer to the second side face 20c than the first recess groove 12. From the viewpoint of protecting the above-described packing 20, the wear ring 10 fitted in the second recess groove 13 has an outside radius Rw that is preferably larger than the outside radius Rp of the packing 20 free from elastic deformation due to a fluid pressure in the chamber 3a or 3b. Note herein that the wear ring 10 has no sealability.

In the hydraulic cylinder of Fig. 1 including such a seal structure illustrated in Fig. 2(a), when the compressed fluid is supplied to the first chamber 3a of the cylinder hole 3 through the first port 7 to increase a pressure P1 in the first chamber 3a, the fluid pressure P1 in the first chamber 3a acts on the first side face 20b of the packing 20 to press the packing 20 in the direction along the axis L. Thus, the packing 20 is moved in the first recess groove 12 toward the second side surface 12c and the second side face 20c of the packing is brought into contact with the second side surface 12c, so that the packing 20 is pressed against the second side surface 12c.

Meanwhile, the fluid pressure P1 causes a moment force, which is clockwise in Fig. 2(b), about an opening edge of the second side surface 12c to act on the packing 20, so that a side edge of the packing 20 that is adjacent to the first chamber 3a and that includes the first side face 20b and the first sealing part 23 elastically extends in the radial direction Y (or toward the slide-receiving face 3c of the cylinder hole 3). As a result, the first sealing part 23 (particularly, the above-described angular portion) reduces the gap δ (= Rc - Rp) formed with the slide-receiving face 3c or comes into contact with the slide-receiving face 3c.

The gap between the sliding face 4c of the piston 4 and the slide-receiving face 3c of the cylinder hole 3 is sealed in the above-described manner. Thus, the fluid pressure P1 in the first chamber 3a allows the piston 4 to move to the second chamber 3b. At this time, the second chamber 3b of the cylinder hole 3 is in communication with the atmosphere through the second port 8.

In contrast, when the compressed fluid is supplied to the second chamber 3b of the cylinder hole 3 through the second port 8, a fluid pressure P2 in the second chamber 3b acts on the second side face 20c of the packing 20, so that the packing 20 is moved in the first recess groove 12 toward the first side surface 12b and is pressed against the first side surface 12b. Meanwhile, the fluid pressure P2 causes a moment force, which is counterclockwise in Fig. 2(b), about an opening edge of the first side surface 12b to act on the packing 20, so that a side edge of the packing 20 that is adjacent to the second chamber 3b and that includes the second side face 20c and the second sealing part 24 elastically extends in the radial direction Y (or toward the slide-receiving face 3c of the cylinder hole 3). As a result, the second sealing part 24 (particularly, the above-described angular portion) reduces the gap δ (= Rc - Rp) formed with the slide-receiving face 3c or comes into contact with the slide-receiving face 3c. Thus, the fluid pressure P2 in the second chamber 3b allows the piston 4 to move to the first chamber 3a. At this time, the first chamber 3a of the cylinder hole 3 is in communication with the atmosphere through the first port 7.

In the above-described seal structure in the hydraulic cylinder 1, even while the piston 4 is maintained in a stopped state in the cylinder hole 3 for a long time, for example, while the compressed fluid is supplied to neither the first chamber 3a nor the second chamber 3b, the sealing parts 23 and 24 of the packing 20 are not in contact with the slide-receiving face 3c of the cylinder hole 3. Therefore, the packing 20 made of the rubber elastic material can be prevented from deteriorating, such as permanently deforming or adhering to the slide-receiving face 3c of the cylinder hole 3.

Furthermore, while the compressed fluid is supplied to either one of the first chamber 3a and the second chamber 3b, sliding friction between the packing 20 and the slide-receiving face 3c can be reduced as much as possible. This can reduce as much as possible the likelihood that conditions of the slide-receiving face 3c (e.g., the roughness of the slide-receiving face 3c and the state of a lubricating film) may cause an adverse effect on an operation of the piston 4 (e.g., a reduction in operating efficiency or cogging) and cause an adverse effect on the packing 20 (e.g., damage to or deterioration of the packing resulting from sliding friction or torsion). This achieves smoother operation of the piston 4 in the hydraulic cylinder 1 and allows longer service life of the packing 20.

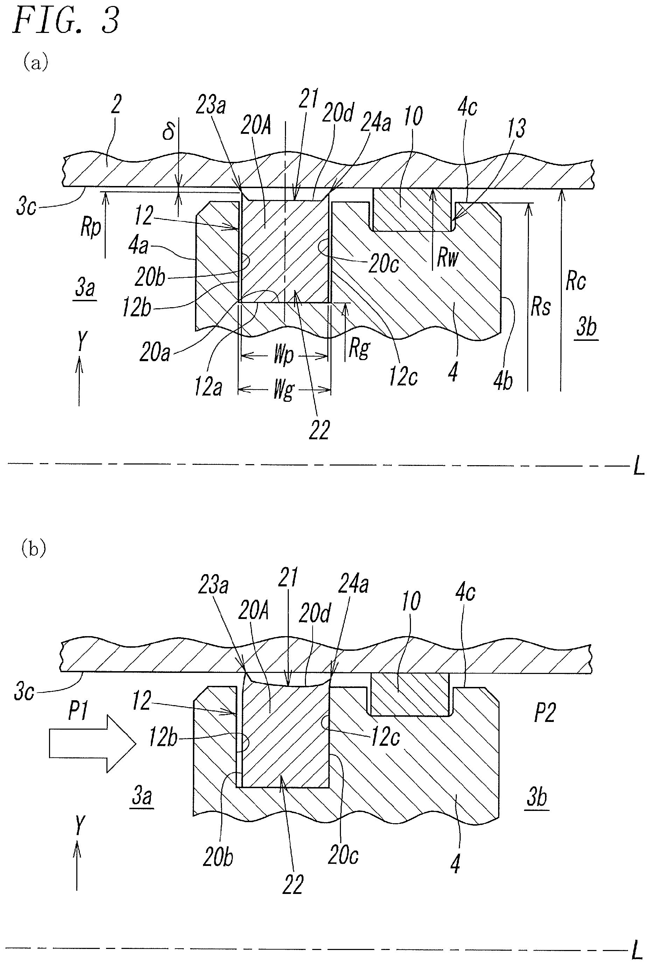

A second embodiment of the seal structure according to the present invention will now be described with reference to Fig. 3. In order to avoid redundant description, the same components as those in the above-described first embodiment are designated by the same reference signs in Fig. 3 and an explanation of these components and the advantages of the components is omitted.

The seal structure according to the second embodiment differs from the seal structure according to the foregoing first embodiment mainly in the forms of the first and second sealing parts arranged circumferentially in the distal part 21 of the packing. As illustrated in Fig. 3(a), in the second embodiment, the first sealing part is formed by a circular first projection 23a projecting integrally from an end of the distal face 20d of a packing 20Ain the radial direction Y (or toward the slide-receiving face 3c of the cylinder hole 3) and the end of the distal face 20d is adjacent to the first side face 20b. Furthermore, the second sealing part is formed by a circular second projection 24a projecting integrally from an end of the distal face 20d in the radial direction Y and the end of the distal face 20d is adjacent to the second side face 20c. In other words, these projections 23a and 24a are spaced apart on opposite ends of the distal face 20d in the direction along the axis L such that the distal face 20d, which is flat along the axis, is interposed between the projections.

The cross-section of the packing 20A, which includes the first projection 23a and the second projection 24a, along the axis L is also symmetric with respect to the center line of the packing in the radial direction Y. Therefore, the distance from the distal face 20d to the tip of the projection 23a is equal to that to the tip of the projection 24a, and the distance from the slide-receiving face 3c of the cylinder hole 3 to the tip of the projection 23a is also equal to that to the tip of the projection 24a. The distance from the axis L to the tip of each of the projections 23a and 24a is the outside radius Rp of the packing 20Ain the second embodiment.

Furthermore, in this packing 20A, each of the two projections 23a and 24a is wedge-shaped such that the width of the projection in the direction along the axis L gradually decreases in a direction from its proximal end on the distal face 20d to its distal end adjacent to the slide-receiving face 3c. Specifically, the first projection 23a is defined by an outer wall, serving as the first side face 20b, perpendicular to the distal face 20d and an inner wall sloping from the distal face 20d toward the first side face 20b. The second projection 24a is defined by an outer wall, serving as the second side face 20c, perpendicular to the distal face 20d and an inner wall sloping from the distal face 20d toward the second side face 20c. In other words, the packing 20A in the second embodiment is obtained by forming a groove having an inverted isosceles trapezoidal shape in section along the axis L in the packing 20 in the first embodiment such that the groove is located in middle part of the outer circumferential surface of the packing 20 in the direction along the axis L and the groove has a bottom on the distal face 20d. The tip of the first projection 23a is formed by an angular portion that forms an acute angle with the first side face 20b. The tip of the second projection 24a is formed by an angular portion that forms an acute angle with the second side face 20c.

The first and second projections 23a and 24a, serving as the first and second sealing parts, formed as described above provide a mechanism similar to that in the first embodiment, or reduce the gap δ (= Rc - Rp) formed with the slide-receiving face 3c or come into contact with the slide-receiving face 3c, as illustrated in Fig. 3(b), when the compressed fluid is selectively supplied to either one of the chambers 3a and 3b, which are respectively adjacent to the projections 23a and 24a, in the cylinder hole 3. This ensures that the gap between the slide-receiving face 3c of the cylinder hole 3 and the sliding face 4c of the piston 4 is sealed as necessary.

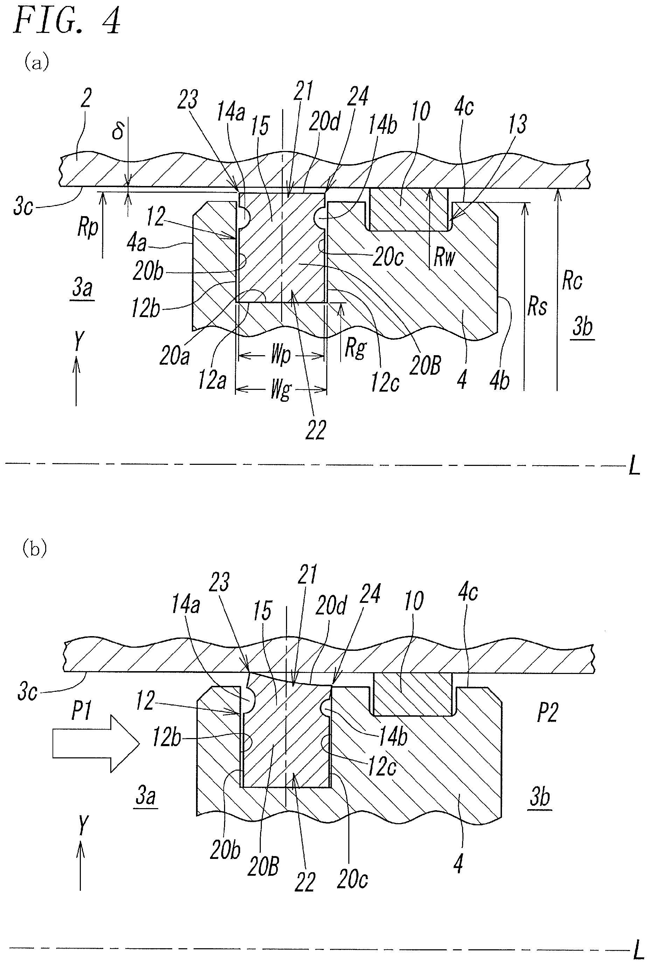

A third embodiment of the seal structure according to the present invention will now be described with reference to Fig. 4. In order to avoid redundant description, the same components as those in the above-described first and second embodiments are designated by the same reference signs in Fig. 4 and an explanation of these components and the advantages of the components is omitted.

As illustrated in Fig. 4(a), the seal structure according to the third embodiment includes a packing 20B, which has a circular first constriction groove 14a in the first side face 20b and a circular second constriction groove 14b in the second side face 20c such that these constriction grooves have the same radius from the axis L. The first and second constriction grooves 14a and 14b are intended to promote stretching of the above-described packing 20B in the radial direction Y when a fluid pressure in the chamber 3a or 3b acts on the side face 20b or 20c. In a cross-section of the packing 20B, the first and second constriction grooves 14a and 14b are opposite each other at the same level from the proximal face 20a to form a constriction 15 in which the width Wp of the packing is narrowed. In such arrangement, the cross-section of the packing 20B including the above-described two constriction grooves 14a and 14b is also symmetric with respect to its center line as in the other embodiments.

More specifically, the two constriction grooves 14a and 14b each have a smooth curved, preferably arc-shaped surface. The constriction 15 has a width larger than 1/2 of the overall width Wp of the packing 20B. The constriction groove 14a has an opening width in the side face 20b, the constriction groove 14b has an opening width in the side face 20c, and the opening width of each groove is smaller than 1/2 of the overall height Hp of the packing 20B. In the third embodiment, all of the two constriction grooves 14a and 14b and the constriction 15 are included in the proximal part 22 of the packing 20B. Specifically, the two constriction grooves 14a and 14b and the constriction 15 are located closer to the outer circumferential surface of the packing 20B than to the center thereof in a direction along the height of the packing 20B and are located in proximity to the opening of the first recess groove 12.

In the third embodiment, the proximal face 20a of the packing 20B is fixed to the bottom surface 12a of the first recess groove 12 with adhesive such that the center line of the cross-section of the packing 20B coincides with that of the first recess groove 12. In other words, the packing 20B is fixed to middle part of the first recess groove 12 in a width direction thereof, the first side face 20b and the first side surface 12b form a gap therebetween, the second side face 20c and the second side surface 12c form a gap therebetween, and these gaps have the same width (= (Wg - Wp)/2). Therefore, the two constriction grooves 14a and 14b are in communication with the opening of the first recess groove 12.

In the seal structure according to the third embodiment including the above-described packing 20B, when the compressed fluid is supplied selectively to either one of the chambers 3a and 3b of the cylinder hole 3, as illustrated in Fig. 4(b), the fluid pressure P1 or P2 causes a moment force, which is clockwise or counterclockwise in Fig. 4(b), to act on the packing 20B. Thus, a side edge of the packing 20B on which the fluid pressure P1 or P2 is acting stretches as in the first embodiment. At this time, the constriction groove 14a or 14b on which the fluid pressure P1 or P2 is acting is increased in size by the fluid pressure, whereas the constriction groove on the opposite side is reduced in size. This further promotes stretching of the above-described side edge. In addition, since a side edge on the opposite side, or on which the fluid pressure is not acting, of the packing 20B forms the gap with the first recess groove 12, the side edge on which the fluid pressure is acting is not hindered from stretching. Furthermore, since the packing 20B is fixed with adhesive to the middle part of the first recess groove 12 in the width direction thereof, the proximal face (inner circumferential surface) 20a of the packing 20B can be prevented from being moved away from the bottom surface 12a of the first recess groove 12 by the above-described moment force and the fluid pressure.

Thus, the sealing part 23 or 24 adjacent to the chamber 3a or 3b on which the fluid pressure is acting reduces the gap δ (= Rc - Rp) formed with the slide-receiving face 3c or comes into contact with the slide-receiving face 3c, thereby ensuring that the gap between the slide-receiving face 3c of the cylinder hole 3 and the sliding face 4c of the piston 4 is sealed as necessary.

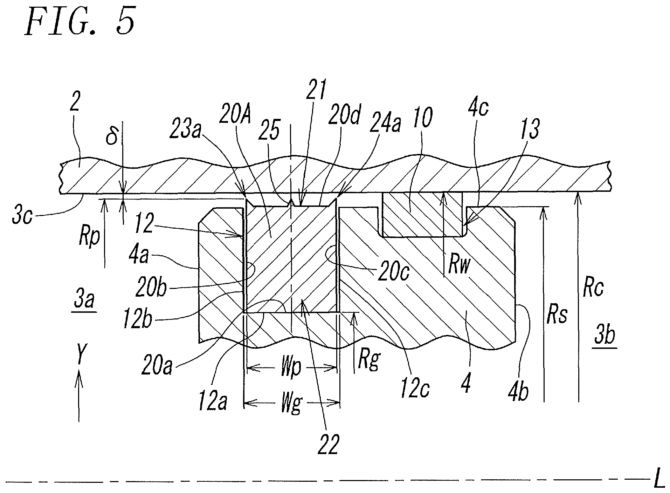

For the seal structure according to the above-described second embodiment, to form a labyrinth seal to reduce or eliminate leakage of the compressed fluid, as illustrated in Fig. 5, the distal face 20d of the packing 20A may have a labyrinth projection 25 projecting in the radial direction Y from the distal face 20d such that the projection is located between the first projection 23a and the second projection 24a. Preferably, the labyrinth projection 25 is located at the middle of the distal face 20d in the direction along the axis L (or on the center line of the cross-section of the packing 20A) and extends circularly about the axis L in parallel to the projections 23a and 24a. The labyrinth projection 25 has a symmetric wedge-shaped cross-section whose width gradually decreases toward its tip, for example, a cross-section shaped like an isosceles triangle having an acute vertex angle. The labyrinth projection 25 has a height from the distal face 20d to the tip, and the height is preferably larger than or equal to the height of the projections 23a and 24a.

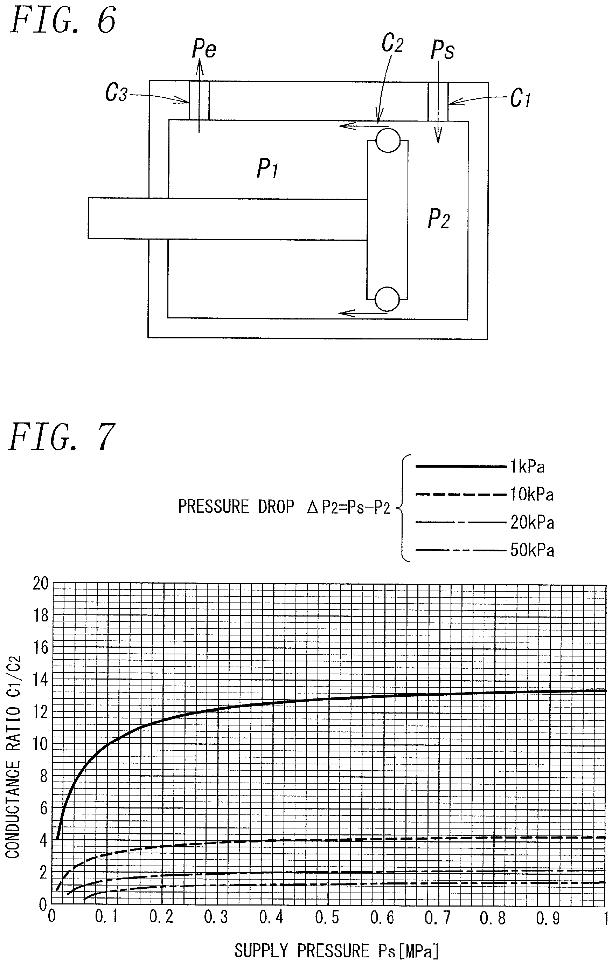

Fig. 7 illustrates the relationships between a supply pressure Ps of compressed fluid, pressure drops ΔP2 (= Ps - P2), and the ratio of a conductance C1 to a conductance C2 obtained under a critical pressure ratio b of 0.5 by using a hydraulic cylinder of Fig. 6 as an analysis model. In Fig. 6, C1 denotes the sonic conductance of a port connected to a head-side pressure chamber, C2 denotes the sonic conductance of a leakage passage formed between the sliding face of the piston and the slide-receiving face of the cylinder hole by the gap δ between the packing and the slide-receiving face, C3 denotes the sonic conductance of a port connected to a rod-side pressure chamber, Ps denotes the supply pressure, P1 denotes a pressure in the rod-side pressure chamber, P2 denotes a pressure in the head-side pressure chamber, and Pe denotes a discharge pressure. Fig. 7 illustrates the result of analysis under conditions where the air was supplied to the head-side pressure chamber through the head-side port and was discharged through the port connected to the rod-side pressure chamber.

Although this analysis result was obtained by using the cylinder having a diameter of 32 mm, it has been shown that, as long as the pressure drop ΔP2 is constant, the conductance ratio C1/C2 does not substantially depend on the cylinder diameter. In other words, if the pressure drops ΔP2 in a graph obtained by using a different cylinder diameter are the same as those in the graph of Fig. 7, the graph obtained by using the different cylinder diameter will substantially coincide with the graph of Fig. 7. For this reason, a graph obtained by using another cylinder diameter is omitted herein. A result similar to that in Fig. 7 is obtained under conditions where the air is supplied to the rod-side pressure chamber through the rod-side port and is discharged through the port connected to the head-side pressure chamber, or in a manner reverse to that in the analysis model of Fig. 6.

As is evident from Fig. 7, while the supply pressure Ps is constant, the smaller the pressure drop ΔPs, the larger the conductance ratio C1/C2. While the pressure drop ΔP2 is constant, the conductance ratio C1/C2 gradually increases with increase in supply pressure Ps and then becomes substantially constant.

Furthermore, for pressures in the pressure chambers of the cylinder, it is known that a pressure drop, ΔP2, up to approximately 20 kPa does not affect practical use of the cylinder. As is seen from Fig. 7, the conductance ratio C1/C2 at which the pressure drop ΔP2 is kept to approximately 20 kPa or less is 2.0 or more, regardless of the supply pressure Ps.

Therefore, in each of the above-described embodiments, the size of the gap δ formed between each sealing part of the packing and the slide-receiving face of the cylinder hole is preferably set so that the conductance ratio C 1/C2 is 2.0 or more at all times.

Although the seal structure in the hydraulic cylinder according to the present invention has been described above, the present invention is not limited to the above-described embodiments. It is needless to say that various design changes can be made without departing from the spirit and scope of the claims.

For example, in the first and second embodiments illustrated in Figs. 2 and 3, the proximal face of the packing may be fixed to the bottom surface of the first recess groove with, for example, adhesive, as in the third embodiment of Fig. 4. In addition, although the rod is located on one side of the piston in the embodiment of the hydraulic cylinder, the rods may be arranged on opposite sides of the piston. Additionally, although each of the sealing parts 23 (23a) and 24 (24a) preferably includes the angular portion that forms a right angle or an acute angle with the corresponding one of the side faces 20b and 20c of the packing 20A, the form of each sealing part is not necessarily limited to the above-described one.

### Reference Signs List

- 1: hydraulic cylinder
- 3: cylinder hole
- 3a: first chamber
- 3b: second chamber
- 3c: slide-receiving face (inner circumferential surface)
- 4: piston
- 4c: sliding face
- 7: first supply/discharge port
- 8: second supply/discharge port
- 10: wear ring
- 12: first recess groove
- 12a: bottom surface
- 12b: first side surface
- 12c: second side surface
- 13: second recess groove
- 14a: first constriction groove
- 14b: second constriction groove
- 20, 20A, 20B: sealing member (packing) for the piston
- 20a: proximal face (inner circumferential surface)
- 20b: first side face
- 20c: second side face
- 20d: distal face
- 21: distal part
- 22: proximal part
- 23: first sealing part
- 23a: first projection (first sealing part)
- 24: second sealing part
- 24a: second projection (second sealing part)
- 25: labyrinth projection
- δ: gap (= Rc - Rp) between the packing and the slide-receiving face
- Rc: inside radius of the cylinder hole (radius of the slide-receiving face)
- Rp: outside radius of the packing
- Wp: cross-sectional width of the packing
- Wg: cross-sectional width of the first recess groove
- Rg: radius of the bottom surface of the first recess groove
- Dg: depth (= Rs - Rg) of the first recess groove
- Rs: outside radius of the piston (radius of the sliding face)
- Hp: cross-sectional height (= Rp - Rg) of the packing
- Rw: outside radius of the wear ring

## Claims

1. A seal structure between a piston and a cylinder hole, in which the piston is slidable axially, in a hydraulic cylinder,
the cylinder hole having a first chamber and a second chamber located on opposite sides of the piston in an axial direction,
the piston having an outer circumferential surface around the axis thereof to define a sliding face, the cylinder hole having an inner circumferential surface around the axis thereof to define a slide-receiving face to which the sliding face of the piston faces and over which the piston slides,
the sliding face of the piston having a recess groove that extends around the axis of the piston and opens in a radial direction of the piston, the recess groove holding a proximal part, serving as an inner circumferential part, of a packing made of a rubber elastic material, the packing including a distal part, serving as an outer circumferential part, protruding from the sliding face,
the distal part of the packing including a first sealing part at a side edge of the packing that is adjacent to the first chamber in the axial direction and a second sealing part at a side edge of the packing that is adjacent to the second chamber in the axial direction, the first sealing part and the second sealing part extending around the axis of the packing,
the first sealing part and the second sealing part of the packing held in the recess groove each having an outside diameter smaller than the diameter of the slide-receiving face of the cylinder hole,
wherein while a compressed fluid is supplied to either one of the first chamber and the second chamber, the side edge of the packing adjacent to the chamber to which the fluid is supplied is radially stretched by elastic deformation due to the pressure of the fluid, thus causing the sealing part that is one of the first sealing part and the second sealing part and that is adjacent to the chamber, to which the fluid is supplied, to reduce a gap formed with the slide-receiving face of the cylinder hole or come into contact with the slide-receiving face.

2. The seal structure according to Claim 1,
wherein the packing and the recess groove each have a cross-section along the axis that is symmetric in the radial direction, and
wherein the recess groove has a depth extending in the radial direction from the sliding face to a bottom surface, with which a proximal end of the packing is in contact, of the recess groove and the depth is greater than or equal to 1/2 of the height of the packing from the proximal end to a distal end thereof.

3. The seal structure according to Claim 2, wherein the recess groove has a pair of side surfaces that extend radially from opposite ends of the bottom surface in the axial direction and face each other, and the bottom surface forms an angle of 90 degrees or less with each of the pair of side surfaces.

4. The seal structure according to Claim 3, wherein the proximal part of the packing held in the recess groove has a maximum width in the axial direction that is smaller than a minimum width of the recess groove between the pair of side surfaces.

5. The seal structure according to Claim 4, wherein the proximal end of the packing is fixed to the bottom surface of the recess groove with adhesive.

6. The seal structure according to Claim 1,
wherein the packing has a pair of side faces located at opposite ends thereof in the axial direction, the pair of side faces are parallel to and opposite each other, and the packing has a cross-section along the axis that is symmetric in the axial direction,
wherein the distal part of the packing has a distal face that faces the slide-receiving face, and
wherein the first sealing part is located at the side edge of the distal face adjacent to the first chamber in the axial direction, and the second sealing part is located at the side edge of the distal face adjacent to the second chamber in the axial direction.

7. The seal structure according to Claim 6, wherein the first sealing part is formed by a first projection projecting from the distal face toward the slide-receiving face, and the second sealing part is formed by a second projection projecting from the distal face toward the slide-receiving face.

8. The seal structure according to Claim 7, wherein the first projection and the second projection each have a tip formed by an angular portion that forms an acute angle with the corresponding one of the pair of side faces of the packing.

9. The seal structure according to Claim 7, wherein the distance from the slide-receiving face to the tip of the first projection is equal to the distance from the slide-receiving face to the tip of the second projection.

10. The seal structure according to Claim 9,
wherein the distal face of the packing is parallel to the slide-receiving face,
wherein each of the first projection and the second projection has a height from the distal face to the tip and the height of the first projection is equal to that of the second projection, and
wherein the first projection and the second projection are spaced apart from each other in the axial direction.

11. The seal structure according to Claim 10,
wherein each of the first projection and the second projection is wedge-shaped such that the width of the projection in the axial direction gradually decreases in a direction from the distal face to the tip.

12. The seal structure according to Claim 10, wherein the distal face of the packing has a labyrinth projection, serving as a labyrinth seal, located between the first projection and the second projection.

13. The seal structure according to Claim 6, wherein the pair of side faces of the packing each have a circular constriction groove in communication with an opening of the recess groove.

14. The seal structure according to Claim 13, wherein the constriction groove has a curved surface.

15. The seal structure according to Claim 1,
wherein the hydraulic cylinder has a supply port connected to the cylinder hole, and
wherein let C1 denote the sonic conductance of the supply port, let C2 denote the sonic conductance of a leakage passage formed between the sliding face and the slide-receiving face by the gap between the packing and the slide-receiving face, and the ratio of the sonic conductance C 1 to the sonic conductance C2 is 2.0 or more at all times.

16. The seal structure according to Claim 1, wherein the piston has a wear ring extending circumferentially on the sliding face such that the wear ring is located next to the packing in the axial direction, and the wear ring has an outside diameter larger than that of the packing while the compressed fluid is supplied to neither the first chamber nor the second chamber.

17. A hydraulic cylinder comprising:
the seal structure according to any one of Claims 1 to 16.
